# EUROPEAN PATENT APPLICATION

(11) **EP 1 460 049 A2**
(43) Date of publication of application: **22.09.2004**
(21) Application number: 04251512.2
(22) Date of filing: 17.03.2004
(51) Int. Cl.: C04B 35/622, F27B 17/00

(54) **Method of manufacturing ceramic film and pressure heat treatment device used therefor**

(30) Priority: 18.03.2003 JP 2003073929
(71) Applicant: SEIKO EPSON CORPORATION, Tokyo 160-0811 (JP)
(72) Inventor: Kijima, Takeshi c/o Seiko Epson Corporation, Swua-shi, Nagano-ken (JP); Natori, Eiji c/o Seiko Epson Corporation, Swua-shi, Nagano-ken (JP)
(74) Representative: Sturt, Clifford Mark

(57) **Abstract**

A method of manufacturing a ceramic film includes providing a treatment target in which a raw material body including a complex oxide is applied to a substrate, and crystallizing the raw material body by holding the treatment target in a chamber and subjecting the treatment target to a heat treatment at a predetermined pressure in a gas which is pressurized at two atmospheres or more and includes at least an oxidizing gas. The gas is supplied to the chamber after being heated to a predetermined temperature in advance.

## Description

### BACKGROUND OF THE INVENTION

The present invention relates to a method of manufacturing a ceramic film and a pressure heat treatment device used therefor.

As a ferroelectric film applied to semiconductor devices (ferroelectric memory (FeRAM), for example), a ferroelectric film having a perovskite structure (PbZrTiO, for example) and a ferroelectric film having a layered perovskite structure (BiLaTiO, BiTiO, or SrBiTaO, for example) have been proposed.

Lead or bismuth contained in the material for the ferroelectric film easily volatilizes at low temperature due to high vapor pressure. Since a high-temperature heat treatment is performed during the crystallization process of the ferroelectric film, lead or bismuth bonds to oxygen in the atmosphere necessary for the crystallization of the ferroelectric and is released, thereby adversely affecting the characteristics of the ferroelectric film after crystallization. Therefore, a technology of performing the heat treatment for crystallizing a ferroelectric which includes a volatile element such as lead or bismuth under pressure to prevent volatilization of such an element has been proposed.

Most conventional pressure heat treatment devices cannot perform rapid heating. A known pressure heat treatment device which can perform rapid heating under pressure has a capacity 1000 times or more of the volume of the treatment target subjected to the heat treatment. However, a long period of time is necessary for pressurization in such a large pressure heat treatment device (about one hour, for example). Moreover, since the chamber capacity is very large, the surface temperature of the treatment target decreases due to adiabatic expansion of the gas. This makes it very difficult to control the temperature. Therefore, such a pressure heat treatment device is not suitable for mass production of the ferroelectric film and exhibits poor rcproducibility of the film characteristics.

### BRIEF SUMMARY OF THE INVENTION

The present invention may provide a method of manufacturing a ceramic film which enables excellent crystallization under pressure, and a pressure heat treatment device which is used for this manufacturing method and can be set at a predetermined pressure and temperature in a short period of time.

A method of manufacturing a ceramic film according to one aspect of the present invention includes:
providing a treatment target in which a raw material body including a complex oxide is applied to a substrate; and
crystallizing the raw material body by holding the treatment target in a chamber and subjecting the treatment target to a heat treatment at a predetermined pressure in a gas which is pressurized at two atmospheres or more and includes at least an oxidizing gas,
wherein the gas is supplied to the chamber after being heated to a predetermined temperature in advance.

A pressure heat treatment device according to another aspect of the present invention rapidly heats a treatment target by supplying a gas including at least an oxidizing gas to a chamber, the pressure heat treatment device including:
the chamber;
a holder which holds the treatment target in the chamber;
a gas supply mechanism which raises a temperature of the gas to a predetermined temperature in advance and supplies the gas to the chamber;
a pressure adjustment mechanism which maintains pressure of the gas in the chamber at a predetermined pressure of two atmospheres or more; and
a heating mechanism which heats the treatment target held by the holder.

### BRIEF DESCRIPTION OF THE SEVERAL VIEWS OF THE DRAWING

FIG. 1 schematically shows a configuration of a pressure heat treatment device according to the present invention.
FIG. 2 shows a treatment target used for a heat treatment according to the present invention.
FIGS. 3A to 3C show XRD patterns of specimen PZT films in an embodiment of the present invention.
FIGS. 4A and 4B show hysteresis characteristics of specimen PZT films in an embodiment of the present invention.

### DETAILED DESCRIPTION OF THE EMBODIMENT

A method of manufacturing a ceramic film according to one embodiment of the present invention includes:
providing a treatment target in which a raw material body including a complex oxide is applied to a substrate; and
crystallizing the raw material body by holding the treatment target in a chamber and subjecting the treatment target to a heat treatment at a predetermined pressure in a gas which is pressurized at two atmospheres or more and includes at least an oxidizing gas,
wherein the gas is supplied to the chamber after being heated to a predetermined temperature in advance.

According to this method of manufacturing a ceramic film, since the gas is supplied to the chamber after being heated to a predetermined temperature in advance, the pressure of the gas inside the chamber can be set at predetermined pressure and temperature in a short period of time, whereby a ceramic film having excellent crystallinity can be formed. Moreover, according to this manufacturing method, since the ceramic is crystallized under pressure differing from the case of raising the temperature at atmospheric pressure or under reduced pressure, a raw material having a composition approximately the same as the stoichiometric composition can be used as the raw material for the target ceramic. Therefore, it is unnecessary to add an excess amount of element which is easily released due to high vapor pressure, such as lead or bismuth, as the ceramic raw material.

With this manufacturing method, the heat treatment may be performed by using a rapid thermal annealing method.

In this manufacturing method, a capacity of the chamber may be 100 times or less of the volume of the substrate, more specifically, may be 10 to 50 times the volume of the substrate. The adiabatic expansion of the gas can be minimized by making the capacity of the chamber as small as 100 times or less of the volume of the substrate in comparison with a conventional method, and by supplying the gas to the chamber after heating the gas to a predetermined temperature in advance. As a result, a ceramic can be crystallized with excellent reproducibility. The gas may be heated in advance to a predetermined temperature of 200°C or less.

In this manufacturing method, the treatment target may be heated to the predetermined temperature at a temperature rise rate of 50°C/scc or more, more specifically, 100°C to 300°C/sec. The orientation of the ceramic can be controlled by rapidly raising the temperature inside the chamber to a predetermined temperature at such a high temperature rise rate. In particular, since the characteristics of the ferroelectric depend on the crystal orientation, the present invention is useful since the ferroelectric can be provided with a specific orientation.

With this manufacturing method, the pressure inside the chamber may be increased to the predetermined pressure of two atmospheres or more within 60 seconds. Since the treatment time is reduced by rapidly setting the pressure of the gas in the chamber at a predetermined pressure, the manufacturing method of the present invention is extremely suitable for mass production.

A pressure heat treatment device according to another embodiment of the present invention rapidly heats a treatment target by supplying a gas including at least an oxidizing gas to a chamber, the pressure heat treatment device including:
the chamber;
a holder which holds the treatment target in the chamber;
a gas supply mechanism which raises a temperature of the gas to a predetermined temperature in advance and supplies the gas to the chamber;
a pressure adjustment mechanism which maintains pressure of the gas in the chamber at a predetermined pressure of two atmospheres or more; and
a heating mechanism which heats the treatment target held by the holder.

According to this pressure heat treatment device, the above manufacturing method can be realized.

In this pressure heat treatment device, a capacity of the chamber may be 100 times or less of the volume of the substrate, more specifically, may be 10 to 50 times the volume of the substrate.

The embodiment of the present invention is described below in more detail with reference to the drawings.

### 1. Pressure heat treatment device

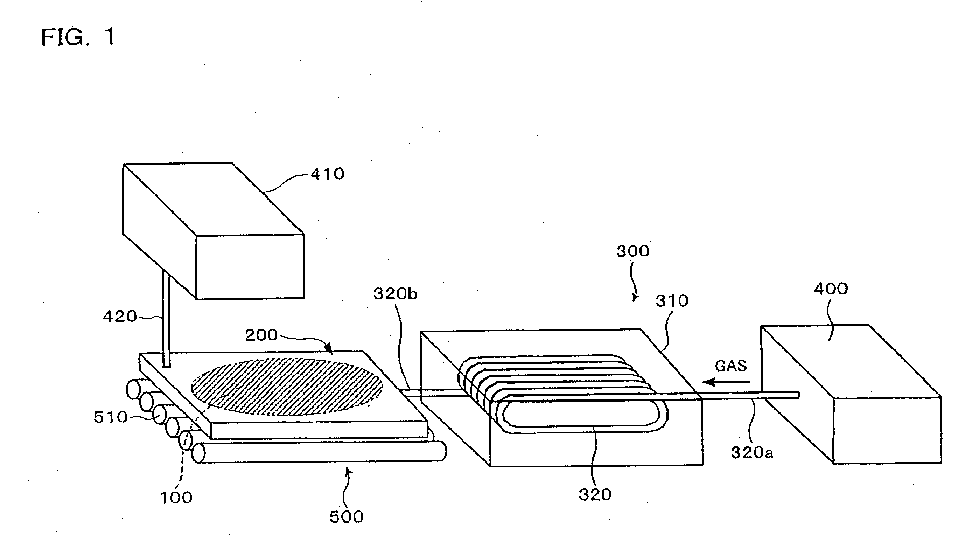

FIG. 1 is a view schematically showing a pressure heat treatment device according to the present embodiment.

The pressure heat treatment device includes a chamber 200, a gas supply mechanism 300 which raises the temperature of a gas to a predetermined temperature in advance and supplies the gas to the chamber 200, pressure adjustment mechanisms 400 and 410 which maintain pressure of the gas in the chamber 200 at a predetermined pressure of two atmospheres or more, and a heating mechanism 500 which heats a treatment target 100.

A holder (not shown) which holds the treatment target 100 is provided for the chamber 200. An opening-closing section (not shown) for placing or removing the treatment target 100 in or from the chamber 20 is provided in the chamber 200.

The capacity of the chamber 200 is 100 times or less, and preferably 10 to 50 times the volume of a substrate which makes up the treatment target 100. The adiabatic expansion of the gas supplied to the chamber 200 can be minimized by reducing the capacity of the chamber 200 to 100 times or less of the volume of the substrate. Moreover, the pressure and temperature inside the chamber 200 can be easily controlled by making the capacity of the chamber 200 smaller than that of a conventional pressure heat treatment device with respect to the treatment target 100. As a result, a ceramic can be crystallized with excellent reproducibility in a short period of time.

The gas supply mechanism 300 includes a thermostatic chamber 310 and a gas pipe 320. Most of the pipe 320 is disposed inside the thermostatic chamber 310. The pipe 320 is bent in the shape of a spiral inside the thermostatic chamber 310. Therefore, the gas is heated to a predetermined temperature by using the thermostatic chamber 310 while passing through the pipe 320. An end 320a of the pipe 320 is connected with the first pressure adjustment mechanism 400, and the other end 320b is connected with the chamber 200.

The first pressure adjustment mechanism 400 and the second pressure adjustment mechanism 410 set the pressure of the gas in the chamber 200 at a predetermined pressure. The gas is supplied to the pressure adjustment mechanism 400 from a gas cylinder. Each of the pressure adjustment mechanisms 400 and 410 includes a conventional mass flow controller. The gas is supplied or discharged corresponding to the pressure inside the chamber 200. Specifically, the gas is supplied to the chamber 200 through the pipe 320 when the pressure of the gas inside the chamber 200 is too low, and the gas is discharged from the chamber 200 through a pipe 420 when the pressure of the gas inside the chamber 200 is too high. The pressure adjustment mechanisms 400 and 410 control the pressure of the gas inside the chamber 200 so that the pressure is maintained constant.

The heating mechanism 500 heats the treatment target 100 at a predetermined temperature. In the case of heating the treatment target 100 by using a rapid thermal annealing method, a halogen lamp or electron beams may be used as the heating mechanism 500. In the example shown in FIG. 1, a plurality of halogen lamps 510 are provided under the chamber 200. The halogen lamp may also be provided on the chamber 200.

According to the pressure heat treatment device of the present embodiment, the pressure and temperature inside the chamber 200 can be easily controlled by supplying the gas to the chamber 200 after heating the gas to a predetermined temperature in advance by using the gas supply mechanism 300, and by making the capacity of the chamber 200 smaller than that of a conventional pressure heat treatment device with respect to the treatment target 100, whereby the atmosphere in the chamber 200 can be set at a predetermined pressure and temperature in an extremely short period of time. As a result, a ceramic having excellent crystallinity can be obtained with excellent reproducibility in a short period of time. In particular, a ferroelectric can be provided with a specific crystal orientation by using the pressure heat treatment device of the present embodiment, whereby a crystal having excellent characteristics can be obtained. In the case of forming a PZT film by using the pressure heat treatment device of the present embodiment as described later in an example, a (111)-oriented crystal having excellent hysteresis characteristics can be obtained.

### 2. Method of manufacturing ceramic film including heat treatment

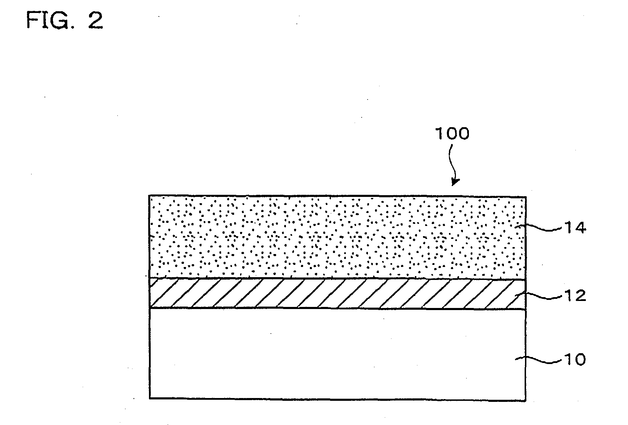

The heat treatment of the treatment target using the pressure heat treatment device is performed as described below, for example.
(a) The treatment target 100, in which a raw material body including a complex oxide is applied to a substrate 18, is provided. As shown in FIG. 2, the treatment target 100 is a product in which a raw material body layer 14 including a complex oxide is formed on the substrate 18. In the example shown in FIG. 2, the substrate 18 is a product in which an electrode layer 12 is formed on a substrate 10.
   As examples of the substrate 10, a semiconductor substrate such as a single element semiconductor such as silicon or germanium or a compound semiconductor such as GaAs or ZnSe, a metal substrate such as Pt, a sapphire substrate, and an insulating substrate such as MgO, SrTiO₃, BaTiO₃, or glass can be given. The substrate is selected depending on the application of the ceramic film. In the case where the ceramic film is applied to a semiconductor device, a silicon substrate, and preferably a silicon single crystal substrate is used as the substrate 10.
   There are no specific limitations to the material for the electrode layer 12 insofar as the material is a conductive material. The electrode layer 12 may be formed of a metal such as Pt, Ir, Au, Al, or Ru, an oxide conductor such as IrO₂ or RuO₂, or a nitride conductor such as TiN or TaN. The electrode layer 12 may have a thickness of 100 to 200 nm, for example.
   An intermediate layer such as an insulating layer or an adhesive layer may be provided between the electrode layer 12 and the substrate 10. The insulating layer may be formed of SiO₂ or Si₃N₄, for example. There are no specific limitations to the adhesive layer insofar as the adhesive layer can secure bonding strength between the substrate and the electrode or between the insulating layer and the electrode. A high-melting-point metal such as tantalum or titanium may be used as the adhesive layer, for example. The intermediate layer may be formed by using various methods such as a thermal oxidation method, CVD method, sputtering method, vacuum deposition method, or MOCVD method.
   The treatment target substrate 100 shown in FIG. 2 is formed as described below.
   The electrode layer 12 is formed on the substrate 10. The electrode layer 12 may be either a single-layer film or a stacked multilayer film.
   The raw material body layer 14 including a complex oxide is formed on the electrode layer 12. As a method for forming the raw material body layer 14, a coating method and a liquid source misted chemical deposition (LSMCD) method can be given. As examples of the coating method, a spin coating method and a dipping method can be given. As the raw material body, a sol-gel raw material or a metalorganic decomposition (MOD) raw material may be used.
   The sol-gel raw material may be prepared as described below. Metal alkoxides having four or less carbon atoms are mixed and subjected to hydrolysis and polycondensation. A strong M-O-M-O··· bond is formed by hydrolysis and polycondensation. The resulting M-O-M bond has a structure similar to the ceramic crystal structure (perovskite structure). M represents a metal element (Bi, Ti, La, or Pb, for example), and O represents oxygen. A solvent is added to the product obtained by hydrolysis and polycondensation to obtain a raw material. The sol-gel raw material is prepared in this manner.
   As examples of the MOD raw material, a polynuclear metal complex raw material in which constituent elements of the ceramic film are continuously connected either directly or indirectly can be given. As specific examples of the MOD raw material, a metal salt of a carboxylic acid can be given. As examples of the carboxylic acid, acetic acid, 2-ethylhexanoic acid, and the like can be given. As examples of the metal, Bi, Ti, La, Pb, and the like can be given. The MOD raw material includes an M-O bond in the same manner as the sol-gel raw material. However, the M-O bond does not form a continuous bond as in the sol-gel raw material obtained by polycondensation. Moreover, the bond structure is similar to the linear structure and completely differs from the perovskite structure.
   In the raw material body, the complex oxide such as the sol-gel raw material or the MOD raw material may be adjusted to the stoichiometric composition, and the mixture of the raw materials may include the metal material (Pb or Bi, for example) included in the complex oxide in an amount of at most 5% in excess of the stoichiometric composition. For example, since the metal material such as Pb or Bi bonds to oxygen at low temperature and vaporizes, 10 to 20% of Bi or Pb is included in the raw material body as an excess additive in a conventional method in order to compensate for shortage during the crystallization process. However, the residual excess additive remaining after the crystallization may enter between the crystals of the ceramic film or between the crystal and the electrode, thereby causing the crystal quality to deteriorate. According to the manufacturing method of this embodiment of the present invention, since the ceramic is crystallized under pressure differing from the case of raising the temperature at atmospheric pressure or under reduced pressure, a raw material having a composition approximately the same as the stoichiometric composition can be used as the raw material for the target ceramic. Therefore, it is unnecessary to add an excessively large amount of clement which is easily released due to high vapor pressure, such as Pb or Bi, as the ceramic raw material, differing from a conventional method.
   In addition to the complex oxide, a paraclectric material having a catalytic effect for the complex oxide may be present in the raw material body in a mixed state. If the paraelectric material is present in the raw material body in a mixed state in addition to the complex oxide which makes up the ferroelectric, a part of the constituent elements of the complex oxide is replaced by the constituent element of the paraelectric material during the crystallization process of the complex oxide, whereby the crystallization temperature can be reduced.
   As the paraelectric material, an oxide which includes Si or Ge in the constituent elements or an oxide which includes Si and Ge in the constituent elements may be used, for example. As such an oxide, a paraelectric material shown by ABO_{X} or BO_{X} in which the A site includes a single element or a composite element of Pb, Bi, Hf, Zr, V, or W and the B site includes a single element or a composite element of Si or Ge may be used. Specific examples include PbSiO (Pb₅Si₃O_{X} or Pb₂Si₁O_{X}), PbGeO (Pb₅Ge₃O_{X} or Pb₂Ge₁O_{X}), BiSiO (Bi₄Si₃O_{X} or Bi₂Si₁O_{X}), BiGeO (Bi₄Ge₃O_{X} or Bi₂Si₁O_{X}), ZrGeO_{X}, HfGeO_{X}, VGeO_{X}, WGeO_{X}, VSiOx, WSiO_{X}, and the like. In the case of using Zr, Hf, V, or W in the A site, occurrence of oxygen vacancy in the ferroelectric is prevented.
(b) The raw material body layer 14 is dried and prcsintered, if necessary.
(c) The raw material body layer 14 is crystallized by heating the raw material body layer 14 using the pressure heat treatment device shown in FIG. 1 to form a ceramic film.
   The heat treatment is performed at a predetermined pressure in the gas which is pressurized at two atmospheres or more and includes at least an oxidizing gas (oxygen, for example) while holding the treatment target 100 inside the chamber 200. The raw material body can be crystallized by this heat treatment. The gas is heated in advance to a predetermined temperature such as 200°C or less, and preferably 50°C to 200°C by using the thermostatic chamber 310 of the gas supply mechanism 300, and supplied to the chamber 200. The chamber 200 is adjusted at a predetermined pressure during the heat treatment by using the pressure adjustment mechanisms 400 and 410. The heat treatment is performed by using the heating mechanism 500 utilizing the rapid thermal annealing method, for example.
   In the present embodiment, the treatment target may be heated to the predetermined temperature (450°C to 800°C, for example) at a temperature rise rate of preferably 50°C/sec or more, and still more preferably 100°C to 300°C/scc. The orientation of the ceramic can be controlled by rapidly raising the temperature inside the chamber to a predetermined temperature at such a high temperature rise rate.
   In the present embodiment, the pressure inside the chamber may be increased to a predetermined pressure of two atmospheres or more, and preferably 2.0 to 9.9 atmospheres within 60 seconds. The treatment time is reduced by rapidly setting the pressure of the gas in the chamber at a predetermined pressure, whereby mass production can be easily achieved.
   In the present embodiment, the metal material can be prevented from being released from the raw material body due to pressurization during the temperature raising process and the heat treatment process at a predetermined temperature by performing the heat treatment for crystallization under a pressure greater than atmospheric pressure. This prevents adhesion of impurities such as an excess material contained in the atmosphere to the ceramic film and formation of an affected layer in the ceramic film.
   The method of the present embodiment is also effective for crystallization of a complex oxide including Bi, which bonds to oxygen in a low temperature region and is casily released into the atmosphere in the same manner as Pb, such as BiLaTiO (hereinafter called "BLT"), BiTiO (hereinafter called "BIT"), or SrBiTaO (hereinafter called "SBT") complex oxide.
(d) An electrode layer (not shown) is formed on the ceramic film 40 to obtain a ferroelectric capacitor. As the material and the formation method for the electrode layer, the same material and formation method as those for the electrode layer 12 may be applied.
   The above-described heat treatment may include use of a gas inert to vaporization of the metal material which makes up the complex oxide, such as nitrogen, argon, or xenon.
   According to the method of manufacturing a ceramic film of the present embodiment, the pressure and temperature inside the chamber 200 can be set at predetermined values in an extremely short period of time, such as 3 to 60 seconds. As a result, a ceramic having excellent crystallinity can be obtained with excellent reproducibility in a short period of time.
   A further detailed example of the manufacturing method according to the present embodiment is described below with reference to the drawings.

### 3. Example

In this example, a PbZr_{0.2}Ti_{0.8}O₃ (PZT) film was formed on a substrate on which a platinum electrode was formed by using the pressure heat treatment device of the present invention shown in FIG. 1.

A coating film was formed by using a sol-gel solution for forming a PbZr_{0.2}Ti_{0.8}O₃ film (concentration: 10 wt%) adjusted to the stoichiometric composition. In this example, the amount of excess Pb in the raw material was set at zero. The coating film was formed through the following steps. The sol-gel solution for forming a PbZr_{0.2}Ti_{0.8}O₃ film was applied to the electrode by spin coating. The spin coating was performed at 500 rpm for three seconds, at 50 rpm for 10 seconds, and at 4000 rpm for 30 seconds. The coating film was presintcred by heating the coating film at 150°C for two minutes and at 300°C for five minutes using a hot plate. A coating layer with a thickness of 150 nm was formed by repeating the above-described coating step and the presintering step three times.

The coating film was crystallized by using the pressure heat treatment device shown in FIG. 1. As the crystallization conditions, the heat treatment was performed at a temperature of 650°C for a treatment time of 10 minutes. The temperature rise rate, the chamber pressure, and the temperature of the gas (oxygen) introduced into the chamber were set at the three types described below. The resulting three types of specimens were referred to as a specimen 1, specimen 2, and specimen 3.

The specimen 1 was obtained at a temperature rise rate of 50°C/sec, a pressure of 9.9 atmospheres, and an introduced oxygen temperature of 200°C. The specimen 2 was obtaincd at a temperature rise rate of 40°C/sec, a pressure of five atmospheres, and an introduced oxygen temperature of 200°C. The specimen 3 was obtained at a temperature rise rate of 50°C/sec, a pressure of one atmosphere, and an introduced oxygen temperature of -20°C.

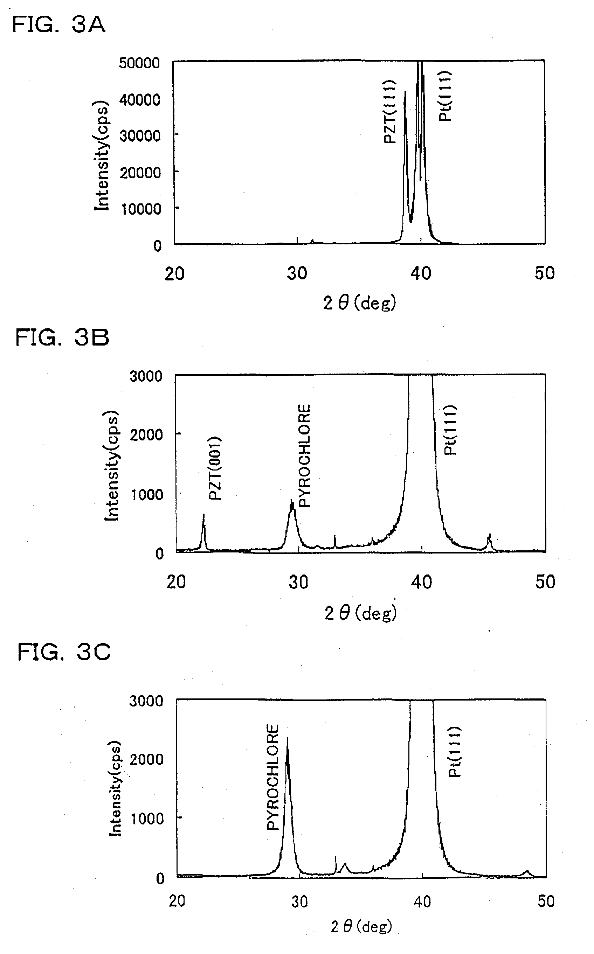

The XRD pattern was measured for each specimen to obtain results shown in FIGS. 3A to 3C.

As shown in FIG. 3A, it was confirmed that a target (111) single-oriented PZT film was obtained as the specimen 1.

As shown in FIG. 3B, it was confirmed that a (001) oriented PZT film including a paraelectric pyrochlore phase was obtained as the specimen 2. It is considered that a PZT film having an orientation differing from that of the specimen 1 was obtained as the specimen 2 since the specimen 2 was obtained at a temperature rise rate of 40°C/sec, which was lower than the temperature rise rate of the specimen 1 (50°C/sec). Since the specimen 2 was obtained at an oxygen pressure of five atmospheres, which was lower than the oxygen pressure of the specimen 1 (9.9 atmospheres), it is considered that the specimen 2 included a small amount of paraelectric pyrochlore phase due to small effect of reducing vaporization of Pb.

As shown in FIG. 3C, it was confirmed that the specimen 3 only included a paraelectric pyrochlore phase. It is considered that the paraelectric pyrochlore phase was obtained as the specimen 3 since the surface temperature of the treatment target was further decreased due to adiabatic expansion because the introduced oxygen temperature was as low as -20°C, and vaporization of Pb could not be prevented because the oxygen pressure inside the chamber was as low as one atmosphere.

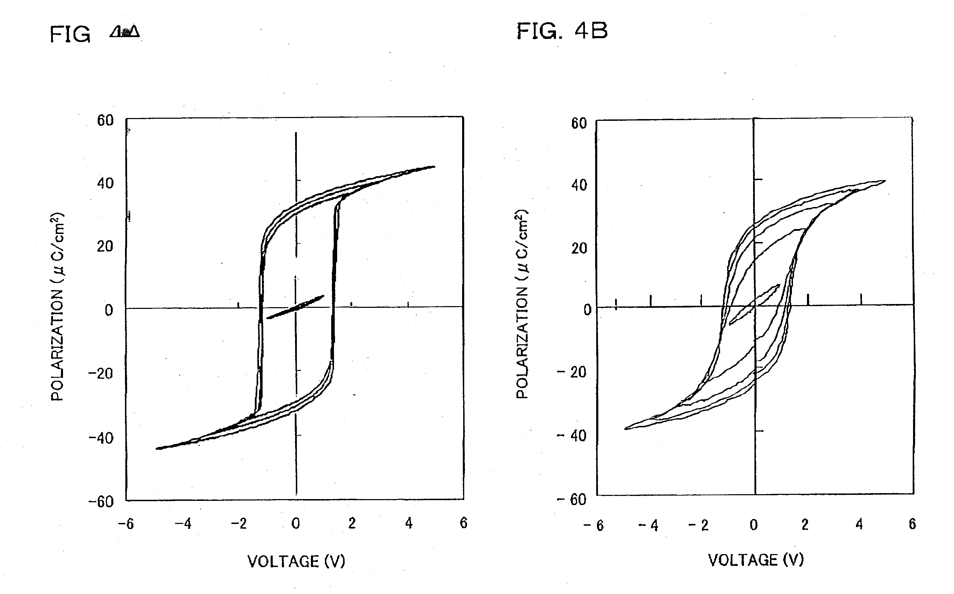

A Pt upper electrode having a diameter of 100 µm and a thickness of 100 nm was formed on the specimens, and the ferroelectric characteristics (hysteresis) were measured. As a result, the ferroelectric characteristics were obtained only from the specimens 1 and 2. The results arc shown in FIGS. 4A and 4B.

As shown in FIG. 4A, it was consumed that only the specimen 1 had excellent hysteresis characteristics. As shown in FIG. 4B, it was confirmed that the specimen 2 had hysteresis characteristics inferior to those of the specimen 1 relating to squareness and saturation characteristics, since the specimen 2 was a (001) oriented film.

## Claims

1. A method of manufacturing a ceramic film, comprising:
providing a treatment target in which a raw material body including a complex oxide is applied to a substrate; and
crystallizing the raw material body by holding the treatment target in a chamber and subjecting the treatment target to a heat treatment at a predetermined pressure in a gas which is pressurized at two atmospheres or more and includes at least an oxidizing gas,
wherein the gas is supplied to the chamber after being heated to a predetermined temperature in advance.

2. The method of manufacturing a ceramic film as defined in claim 1, wherein the heat treatment is performed by using a rapid thermal annealing method.

3. The method of manufacturing a ceramic film as defined in claim 1 or 2, wherein a capacity of the chamber is 100 times or less of a volume of the substrate.

4. The method of manufacturing a ceramic film as defined in any one of claims 1 to 3, wherein the treatment target is heated to the predetermined temperature at a temperature rise rate of 50°C/sec or more.

5. The method of manufacturing a ceramic film as defined in any one of claims 1 to 4, wherein pressure of the gas in the chamber is increased to the predetermined pressure of two atmospheres or more within 60 seconds.

6. The method of manufacturing a ceramic film as defined in any one of claims 1 to 5, wherein the gas is heated in advance to the predetermined temperature of 200°C or less.

7. A pressure heat treatment device which rapidly heats a treatment target by supplying a gas including at least an oxidizing gas to a chamber, the pressure heat treatment device comprising:
the chamber;
a holder which holds the treatment target in the chamber;
a gas supply mechanism which raises a temperature of the gas to a predetermined temperature in advance and supplies the gas to the chamber;
a pressure adjustment mechanism which maintains pressure of the gas in the chamber at a predetermined pressure of two atmospheres or more; and
a heating mechanism which heats the treatment target held by the holder.

8. The pressure heat treatment device as defined in claim 7, wherein a capacity of the chamber is 100 times or less of a volume of a substrate.
